# EUROPÄISCHE PATENTSCHRIFT

(11) **EP 3 921 529 B1**
(45) Veröffentlichungstag und Bekanntmachung des Hinweises auf die Patenterteilung: **16.09.2026**
(21) Anmeldenummer: 19704278.1
(22) Anmeldetag: 05.02.2019
(51) Int. Cl.: F02D 9/10, F16K 27/02, F02D 9/04, F02M 26/70

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF FORMANT VOLET POUR MOTEUR À COMBUSTION INTERNE

(43) Veröffentlichungstag der Anmeldung: 15.12.2021
(73) Patentinhaber: Pierburg GmbH, 41460 Neuss (DE)
(72) Erfinder: KRIEN, Andreas, 41460 Neuss (DE); WALLRAVEN, Markus, 41460 Neuss (DE)
(74) Vertreter: Eisenführ Speiser
(86) Internationale Anmeldenummer: PCT/EP2019/052749
(87) Internationale Veröffentlichungsnummer: WO 2020/160756

(56) Entgegenhaltungen:
- EP-A1- 0 424 197
- EP-A1- 1 707 780
- EP-A1- 2 031 215
- WO-A1-81/02764
- BR-A2- PI0 705 168
- DE-A1- 102006 045 420
- US-A- 1 230 882
- US-A1- 2011 073 789
- US-A1- 2014 238 330
- US-B1- 6 367 772

## Beschreibung

Die Erfindung betrifft eine Klappenvorrichtung für eine Verbrennungskraftmaschine mit einem Strömungsgehäuse, dessen Innenumfangsfläche einen Strömungskanal begrenzt, einer drehbar gelagerten Stellwelle, welche durch eine Antriebsvorrichtung antreibbar ist, einem Klappenkörper, welcher an der drehbar gelagerten Stellwelle im Strömungskanal angeordnet ist, wobei die Haupterstreckungsebene des Klappenkörpers zur Drehachse der Stellwelle beabstandet angeordnet ist.

Derartige Klappenvorrichtungen werden beispielsweise als Abgasstauklappen oder als Abgasrückführventile in Niederdruck- oder Hochdruckabgaskreisläufen eingesetzt und dienen zur Regelung einer zu den Zylindern eines Verbrennungsmotors zurückzuführenden Abgasmenge oder zur Regelung des Drucks im Abgasrückführkanal zur möglichen Erhöhung der zurückzuführenden Abgasmenge, was jeweils eine Verringerung der Schadstoffemissionen des Verbrennungsmotors zur Folge hat. Auch ist es bekannt, derartige Ventile als Waste-Gate-Ventile an der Turbine eines Turboladers zu verwenden.

Eine derartige Klappenvorrichtung ist in DE 10 2006 045 420 A1 offenbart, wobei die Klappenvorrichtung ein Strömungsgehäuse aufweist, in welchem ein Strömungskanal ausgebildet ist. In dem Strömungskanal ist ein Klappenkörper angeordnet, welcher an einer Stellwelle befestigt ist und über die Stellwelle drehbar in dem Strömungsgehäuse gelagert ist. Der Klappenkörper ist exzentrisch an der Stellwelle befestigt, wobei die Haupterstreckungsebene des Klappenkörpers zur Drehachse der Stellwelle versetzt angeordnet ist. Die Stellwelle ist mit einem elektromotorischen Aktor in Eingriff und wird durch diesen angetrieben.

Nachteilig an der in der DE 10 2006 045 420 A1 gezeigten Ausführung ist, dass die exzentrische Befestigung des Klappenkörpers an der Stellwelle des Klappenkörpers einen erhöhten Verschleiß an der Innenumfangsfläche des Strömungsgehäuses verursacht, wodurch die Lebensdauer der Klappenvorrichtung reduziert wird. Der Klappenkörper liegt in seiner Schließstellung über den gesamten umlaufenden Außenbereich an der Innenumfangsfläche des Strömungskanals an. In der Offenstellung und während der Schwenkbewegung zwischen der Schließstellung und der Offenstellung des Klappenkörpers wird der Kontakt zwischen der Innenumfangsfläche des Strömungskanals und dem Klappenkörper größtenteils aufgehoben, wobei der Klappenkörper jedoch in einem die Drehachse der Stellwelle umgebenden Bereich dauerhaft mit der Innenumfangsfläche in Kontakt bleibt. Dabei wandert der dauerhaft bestehende Kontakt zwischen dem Klappenkörper und dem Strömungsgehäuse während der Schwenkbewegung des Klappenkörpers auf der Innenumfangsfläche des Strömungsgehäuses und verursacht durch die wiederholende Schwenkbewegung des Klappenkörpers eine kreisförmige Verschleißfläche auf der Innenumfangsfläche.

Aus der US 2011/073789 A1, der US 2014/238330 A1 und der EP 0 424 197 A1 ist eine Klappenvorrichtung bekannt, welche ein Strömungsgehäuse und einen verstellbaren Klappenkörper aufweist, wobei das Strömungsgehäuse eine Aussparung aufweist, welche an einer einen Strömungskanal begrenzenden Innenumfangsfläche und im Bereich des Klappenkörpers vorgesehen ist.

Es stellt sich daher die Aufgabe, eine Klappenvorrichtung mit einem an der Stellwelle exzentrisch befestigten Klappenkörper zu schaffen, welche einen reduzierten Verschleiß im Schwenkbereich des Klappenkörpers aufweist, wodurch die Lebensdauer der Klappenvorrichtung erhöht wird.

Diese Aufgabe wird durch eine Klappenvorrichtung mit den Merkmalen des Hauptanspruchs gelöst. Dadurch, das Strömungsgehäuse an der Innenumfangsfläche eine Aussparung aufweist, wobei die Aussparung im Schwenkbereich des Klappenkörpers angeordnet ist und zu einer durch die Drehachse der Stellwelle und die Längsachse des Strömungskanals aufgespannte Ebene beabstandet angeordnet ist, wird der dauerhafte Kontakt zwischen dem Klappenkörper und der Innenumfangsfläche während der Schwenkbewegung des Klappenkörpers verhindert. Die Aussparung bewirkt, dass während der Schwenkbewegung im verschleißgefährdeten Bereich ein radial erstreckender Spalt zwischen dem Klappenkörper und der Innenumfangsfläche vorgesehen ist. Dadurch wird der Verschleiß reduziert und die Lebensdauer der Klappenvorrichtung erhöht.

Die taschenartige Aussparung weist eine Tiefe zwischen 0,05 mm und 0,5 mm auf, wobei bereits durch die geringe Tiefe der Aussparung der Verschleiß verhindert werden kann und eine negative Beeinflussung der Strömung des durch den Strömungskanal strömenden Gases verhindert werden kann.

Vorzugsweise liegt der Klappenkörper in seiner den Strömungskanal vollständig verschließenden Schließstellung dichtend an einem Dichtbereich der Innenumfangsfläche an, wobei sich die Aussparung in Drehrichtung des Klappenkörpers axial bis unmittelbar vor den Dichtbereich erstreckt. Dadurch kann der Verschleiß verhindert werden, wobei der Strömungskanal in der Schließstellung des Klappenkörpers vollständig und fluiddicht verschlossen werden kann.

In einer bevorzugten Ausgestaltung ist die Aussparung ausschließlich im Schwenkbereich des Klappenkörpers vorgesehen. Dadurch wird die Beeinflussung der Strömung des durch den Strömungskanal strömenden Gases minimiert.

Vorzugsweise erstreckt sich die Aussparung ausgehend von einem Anschlussstutzen bis zum Schwenkbereich des Klappenkörpers. Dadurch kann die Aussparung einfach und kostengünstig hergestellt werden. Vorzugsweise ist die Aussparung eine Nut, welche eine Haupterstreckungsrichtung in Richtung der Längsachse des Strömungskanals aufweist. Auf diese Weise kann die Aussparung einfach und kostengünstig herstellt werden.

Vorzugsweise weist die Aussparung in Umfangsrichtung des Strömungskanals und/oder in Strömungsrichtung des Strömungskanals einen stetigen Übergang zu der Innenumfangsfläche auf. Dadurch wird eine negative Beeinflussung der Strömung des durch den Strömungskanal strömenden Gases, beispielsweise durch unerwünschte Verwirbelungen durch unstetige Übergänge zwischen der Innenumfangsfläche und der Aussparung, verhindert.

Vorzugsweise sind zwei, tangential zueinander versetzte Aussparungen an der Innenumfangsfläche vorgesehen. In einer bevorzugten Ausgestaltung ist die erste Aussparung im Bereich einer oberen Hälfte des Klappenkörpers angeordnet und die zweite Aussparung im Bereich der unteren Hälfte des Klappenkörpers angeordnet. Der durch die exzentrische Befestigung des Klappenkörpers verursachte Verschleiß tritt an zwei zueinander gegenüberliegenden und an die Stellwelle angrenzenden Bereichen der Innenumfangsfläche des Strömungsgehäuses auf. Um den Verschleiß in beiden Bereichen zu verhindern, wird jeweils eine Aussparung vorgesehen.

Vorzugsweise ist das Strömungsgehäuse aus Kunststoff hergestellt. Dadurch können die Herstellungskosten und der Herstellungsaufwand reduziert werden. Das Strömungsgehäuse kann auch aus einem Faserverbundwerkstoff hergestellt sein, wobei zur Verbesserung der mechanischen Eigenschaften des Strömungsgehäuse Fasern, beispielsweise Glasfasern, in einer Kunststoffmatrix eingebettet sind.

In einer bevorzugten Ausgestaltung ist das Strömungsgehäuse aus Polyphenylensulfid hergestellt, wobei das Polyphenylensulfid ein hochtemperaturbeständiger thermoplastischer Kunststoff ist. Dadurch kann die Lebensdauer des Strömungsgehäuses, insbesondere wenn das Strömungsgehäuse von heißen Gasen, beispielsweise von Abgasen eines Verbrennungsmotors, durchströmt wird, erhöht werden. Das aus einem hochtemperaturbeständigen Kunststoff hergestellte Strömungsgehäuse kann bei Gastemperaturen von über 200 °C zuverlässig eingesetzt werden.

Vorzugsweise ist der Klappenkörper aus einem metallischen Werkstoff hergestellt, wodurch der Klappenkörper verschleißfest und temperaturbeständig ausgeführt werden kann.

Vorzugsweise ist die Antriebsvorrichtung in einem Antriebsgehäuse angeordnet, wobei das Antriebsgehäuse einstückig mit dem Strömungsgehäuse ausgeführt ist. Dadurch können der Herstellungsaufwand und der Montageaufwand der Klappenvorrichtung reduziert werden.

In einer vorteilhaften Ausgestaltung ist die Stellwelle einseitig gelagert, wobei die Stellwelle durch eine Öffnung im Strömungsgehäuse in den Strömungskanal ragt. Durch die einseitige Lagerung der Stellwelle kann die Lagerung der Stellwelle vereinfacht und die Lebensdauer der Klappenvorrichtung erhöht werden, wobei ein im Strömungskanal angeordnetes und durch die heißen Gase temperaturbelastetes Lager und die dazugehörige Dichtung entfallen können.

Vorzugsweise ist an der Stellwelle eine Anlaufscheibe vorgesehen, wobei die Anlaufscheibe zwischen dem Klappenkörper und der Innenumfangsfläche angeordnet ist. In einer bevorzugten Ausgestaltung liegt die Anlaufscheibe mit einer zum Klappenkörper abgewandten Fläche am Strömungsgehäuse an und mit einer zum Klappenkörper zugewandten Fläche am Klappenkörper an. Durch die Anlaufscheibe kann der Verschleiß des Strömungsgehäuses im Bereich der Öffnung, durch die die Stellwelle in den Strömungskanal ragt, reduziert werden, wobei sich der Klappenkörper großflächig an dem Strömungsgehäuse abstützt und dadurch verhindert wird, dass sich die Außenkante des Klappenkörpers in das Strömungsgehäuse einarbeitet. Außerdem wird durch die Anlaufscheibe die Dichtigkeit im Bereich, in dem die Stellwelle das Strömungsgehäuse durchgreift, verbessert.

Vorzugsweise ist die Anlaufscheibe drehfest an der Stellwelle befestigt. Die drehfeste Verbindung der Anlaufscheibe an der Stellwelle kann durch eine formschlüssige Verbindung ausgeführt werden, wobei die Anlaufscheibe und die Stellwelle eine Schlüsselkontur aufweisen. Durch die formschlüssige Verbindung der Anlaufscheibe an der Stellwelle kann der Verschleiß im Bereich der Öffnung reduziert werden.

In einer bevorzugten Ausgestaltung ist die Stellwelle zylindrisch ausgeführt und weist zur Befestigung des Klappenkörpers einen an der Umfangsfläche der Stellwelle hergestellten, abgeflachten Befestigungsbereich auf. Dadurch kann der Klappenkörper einfach, kostengünstig und zuverlässig an der Stellwelle befestigt werden.

Vorzugsweise ist die Anlaufscheibe über eine formschlüssige Welle-Nabe-Verbindung an der Stellwelle drehfest angeordnet, wobei die Anlaufscheibe an dem abgeflachten Befestigungsbereich angeordnet ist, wobei der Querschnitt der Welle-Nabe-Verbindung dem Querschnitt des abgeflachten Befestigungsbereichs der Stellwelle entspricht. Dabei weist das Übertragungsprofil der Welle-Nabe-Verbindung einen Kreisabschnitt, beispielsweise einen Kreisbogen über 200°, und einen geraden Abschnitt, welcher die beiden Enden des Kreisabschnitts miteinander verbindet, auf. Durch eine derartige Ausgestaltung der drehfesten Verbindung zwischen dem Klappenkörper und der Stellwelle kann der Herstellungsaufwand reduziert werden, da zum Herstellen des Befestigungsbereichs und des Übertragungsprofils der Welle-Nabe-Verbindung lediglich ein einziger axial erstreckender Abschnitt der zylindrische Stellwelle, insbesondere durch Fräsen, hergestellt werden muss.

Es wird somit eine Klappenvorrichtung mit einem exzentrisch gelagerten Klappenkörper geschaffen, welche keinen bzw. einen reduzierten Verschleiß im Schwenkbereich des Klappenkörpers aufweist, wodurch die Lebensdauer erhöht wird.

Ein Ausführungsbeispiel einer erfindungsgemäßen Klappenvorrichtung ist in den Figuren dargestellt und wird nachfolgend beschrieben.
Figur 1 zeigt eine perspektivische Ansicht einer erfindungsgemäßen Klappenvorrichtung.
Figur 2 zeigt eine Querschnittansicht des Strömungsgehäuses und der Stellwelle der erfindungsgemäßen Klappenvorrichtung gemäß der Figur 1.
Figur 3 zeigt eine Längsschnittansicht des Strömungsgehäuses und der Stellwelle der erfindungsgemäßen Klappenvorrichtung gemäß der Figur 1.
Figur 4 zeigt eine Längsschnittansicht des Strömungsgehäuses und des Klappenkörpers in einer Offenstellung der erfindungsgemäßen Klappenvorrichtung gemäß der Figur 1.
Figur 5 zeigt eine Längsschnittansicht des Strömungsgehäuses und des Klappenkörpers in einer Schließstellung der erfindungsgemäßen Klappenvorrichtung gemäß der Figur 1.

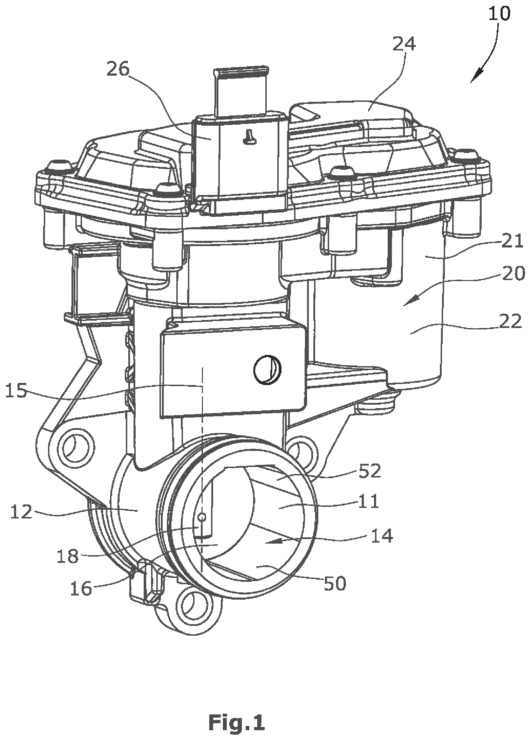

Die Figur 1 zeigt eine Klappenvorrichtung 10, welche ein Strömungsgehäuse 12 umfasst, welches durch eine Innenumfangsfläche 11 einen Strömungskanal 14 begrenzt. Der freie Durchströmungsquerschnitt des Strömungskanals 14 kann durch einen drehbar im Strömungskanal 14 angeordneten Klappenkörper 16 geregelt werden. Der Klappenkörper 16 ist aus einem metallischen Werkstoff hergestellt und mit einer drehbar in dem Strömungsgehäuse 12 gelagerten Stellwelle 18 fest verbunden.

Zur Betätigung der Stellwelle 18 ist die Stellwelle 18 mit einem dem Strömungskanal 14 abgewandten axialen Ende mit einer Antriebsvorrichtung 20 drehfest verbunden. Die Antriebsvorrichtung 20 ist in einem Antriebsgehäuse 21 angeordnet und weist einen Elektromotor und ein zwischen dem Elektromotor und der Stellwelle 18 zwischengeschaltetes Getriebe auf, wobei der Elektromotor und das Getriebe in den Figuren nicht gezeigt sind. Die Stellwelle 18 ist über ihren aus dem Strömungsgehäuse 12 ragenden Abschnitt einseitig in dem Antriebsgehäuse 21 drehbar gelagert.

Das Antriebsgehäuse 21 ist mit dem Strömungsgehäuse 12 einstückig hergestellt und aus einem hochtemperaturbeständigen und faserverstärkten Kunststoff, insbesondere aus Polyphenylensulfid, hergestellt. Das Antriebsgehäuse 21 weist einen Gehäusegrundkörper 22 und einen mit dem Gehäusegrundkörper 22 verschraubten Gehäusedeckel 24 auf, wobei am Gehäusedeckel 24 ein Stecker 26 angeordnet ist, welcher mit einer in der Figur 1 nicht gezeigten und im Inneren des Antriebsgehäuses 21 angeordneten Leiterplatte gekoppelt ist und mehrere Anschlüsse für die Signal- und elektrische Versorgungsleitungen aufweist.

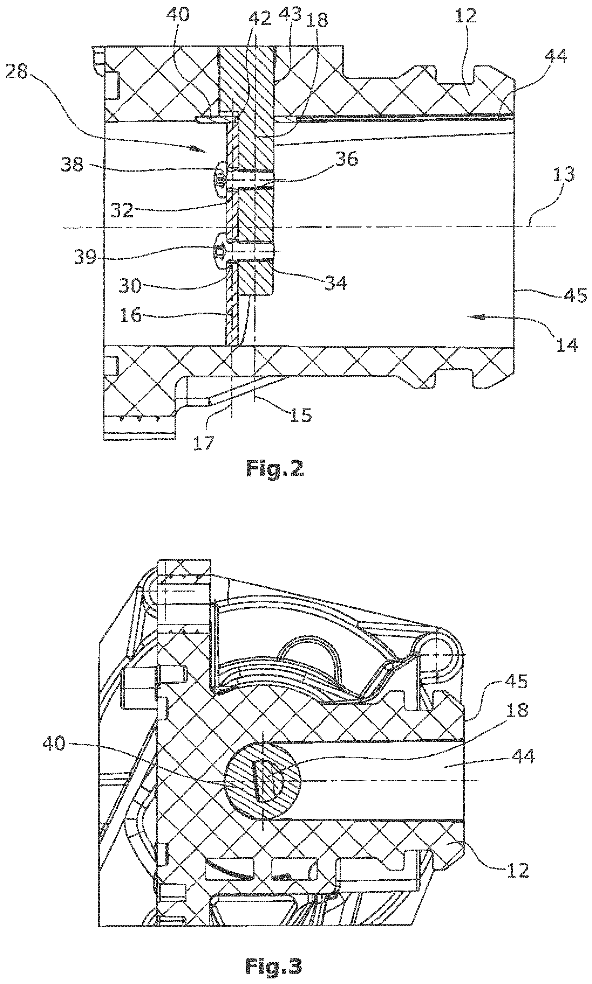

Die Figur 2 zeigt das Strömungsgehäuses 12 und einen in das Strömungsgehäuse 12 ragenden Abschnitt der Stellwelle 18. Die Stellwelle 18 weist einen Befestigungsbereich 28 für die Befestigung des Klappenkörpers 16 auf. Der Befestigungsbereich 28 ist als ein an der Umfangsfläche der Stellwelle 18 abgeflachter Bereich ausgeführt und weist eine Schlüsselkontur auf. Die Schlüsselkontur ist in Figur 3 gezeigt und umfasst einen Kreisabschnitt mit einem konstanten Radius, beispielsweise einen Kreisbogen über 200°, und einen geraden Abschnitt auf. Der gerade Abschnitt erstreckt sich zwischen den beiden Enden des Kreisabschnitts. An dem Befestigungsbereich 28 liegt der Klappenkörper 16 an, wobei der Klappenkörper 16 mit der Stellwelle 18 verschraubt ist. Hierfür weist der Klappenkörper 16 zwei Durchgangsöffnungen 30, 32 auf, welche in Axialrichtung der Stellwelle 18 zueinander versetzt sind. Die Stellwelle 18 weist im Befestigungsbereich 28 zwei zu den Durchgangsöffnungen 30, 32 korrespondierende Gewindebohrungen 34, 36 auf. Der Klappenkörper 16 ist durch zwei, durch die Durchgangsöffnungen 30, 32 gesteckten und in die Gewindebohrungen 34, 36 eingeschraubte Schrauben 38, 39 an der Stellwelle 18 befestigt.

An dem dem Antriebsgehäuse 21 zugerichteten Ende des Befestigungsbereichs 28 ist eine Anlaufscheibe 40 vorgesehen. Die Anlaufscheibe 40 liegt mit ihrer zum Klappenkörper 16 zugewandten, ringförmigen Oberfläche an dem Klappenkörper 16 an und mit ihrer dem Strömungsgehäuse 12 zugewandten ringförmigen Oberfläche an der Innenumfangsfläche 11 des Strömungsgehäuses 12 an. Die Anlaufscheibe 40 ist über eine Welle-Nabe-Verbindung drehfest mit der Stellwelle 18 verbunden, wobei die Anlaufscheibe 40 eine dem Querschnitt des Befestigungsbereichs 28 entsprechende Öffnung 42 aufweist, so dass der Befestigungsbereich 28 gleichzeitig ein Bestandteil der Welle-Nabe-Verbindung ist.

Die Anlaufscheibe 40 ist in einer an der Innenumfangsfläche 11 des Strömungsgehäuses 12 hergestellten Nut 44 angeordnet, wobei sich die Nut 44 bis zu einem Anschlussstutzen 45 des Strömungsgehäuses 12 axial erstreckt, wodurch die Montage der Anlaufscheibe 40 erleichtert wird.

Durch die Anlaufscheibe 40 wird ein verschleißbedingtes Einarbeiten des metallischen Klappenkörpers 16 in das aus Kunststoff hergestellten Strömungsgehäuse 12 verhindert, wobei durch die drehfeste Verbindung der Anlaufscheibe 40 an der Stellwelle 18 der Verschleiß nochmals reduziert wird.

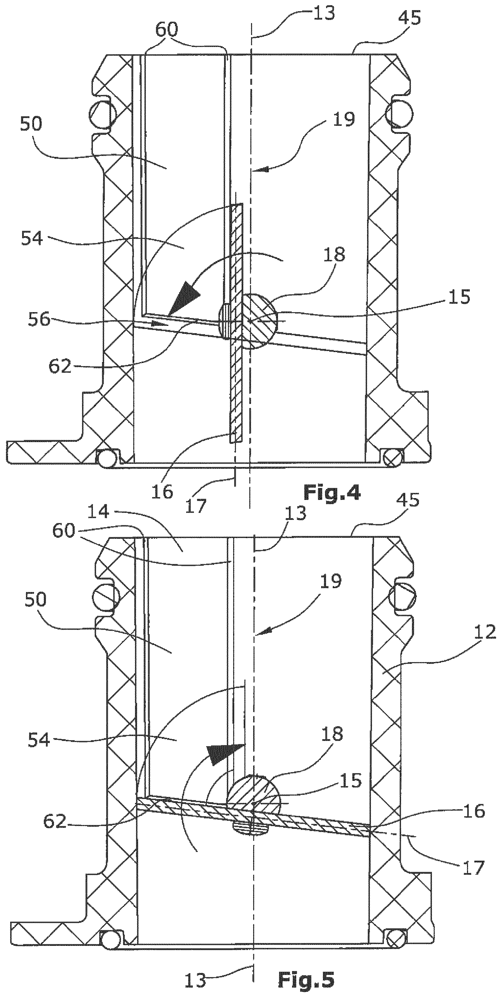

Die Figuren 4 und 5 zeigen das Strömungsgehäuse 12, die Stellwelle 18 und den Klappenkörper 16. Der Klappenkörper 16 weist eine Haupterstreckungsebene 17 auf, welche zur Drehachse 15 der Stellwelle 18 radial versetzt angeordnet ist, so dass der Klappenkörper 16 exzentrisch an der Stellwelle 18 befestigt ist. Der exzentrisch befestigte Klappenkörper 16 liegt in seiner Schließstellung über den gesamten umlaufenden Außenbereich an einem Dichtbereich 56 der Innenumfangsfläche 11 des Strömungskanals 14 an. Während der Schwenkbewegung zwischen der Schließstellung und der Offenstellung sowie in der Offenstellung des Klappenkörpers 16 wird der Kontakt zwischen der Innenumfangsfläche 11 des Strömungskanals 14 und dem Klappenkörper 16 größtenteils aufgehoben, wobei der Klappenkörper 16 jedoch in einem die Drehachse 15 der Stellwelle 18 umgebenden Bereich dauerhaft mit der Innenumfangsfläche 11 in Kontakt bleibt. Dabei wandert der dauerhaft bestehende Kontakt zwischen dem Klappenkörper 16 und dem Strömungsgehäuse 12 während der Schwenkbewegung des Klappenkörpers 16 auf der Innenumfangsfläche 11 des Strömungsgehäuses 12 und verursacht durch die wiederholende Schwenkbewegung des Klappenkörpers 16 eine kreisförmige Verschleißfläche auf der Innenumfangsfläche 11. Eine derartige Verschleißfläche bildet sich jeweils in einem an die Stellwelle 18 angrenzenden Bereich der oberen Klappenhälfte des Klappenkörpers 16 und in einem an die Stellwelle 18 angrenzenden Bereich der unteren Klappenhälfte des Klappenkörpers 16.

Um den Verschleiß zu verhindern, sind an der Innenumfangsfläche 11 zwei nutartige Aussparungen 50, 52 vorgesehen, welche sich über einen Schwenkbereich 54 des Klappenkörpers 16 und bis zum Anschlussstutzen 45 axial erstrecken. Die Aussparungen 50, 52 erstrecken sich in Drehrichtung des Klappenkörpers 16 bis unmittelbar vor den Dichtbereich 56. Die Aussparungen 50, 52 sind beabstandet zu einer durch die Drehachse 15 der Stellwelle 18 und eine Längsachse 13 des Strömungskanals 14 aufgespannten Ebene 19 angeordnet, wodurch die Aussparungen 50, 52 in dem Bereich der Verschleißflächen hergestellt sind. Dabei muss die Längsachse des Strömungskanals 14 nicht, wie in den Figuren 4 und 5 gezeigt, zwingenderweise die Symmetrieachse des Strömungskanals 14 sein, sondern kann beliebig im Strömungskanal 14 radial zur Symmetrieachse des Strömungskanals 14 versetzt sein.

Die Aussparungen 50, 52 weisen eine Tiefe von 0,1 mm auf. Außerdem weisen die Aussparungen 50, 52 in Umfangsrichtung des Strömungskanals 14 einen stetigen Übergang 60 zu der Innenumfangsfläche 11 des Strömungsgehäuses 12 und einen stetigen Übergang 62 in Strömungsrichtung des Strömungskanals 14 auf. Durch die stetigen Übergänge 60, 62 wird die Strömung der durch den Strömungskanal 14 strömenden Abgase nicht negativ, beispielsweise durch Verwirbelungen, beeinflusst.

Durch die Aussparungen 50, 52 bildet sich während der Schwenkbewegung des Klappenkörpers 16 ein Spalt zwischen dem Klappenkörper 16 und dem Strömungsgehäuse 12, wodurch der Kontakt zwischen dem Klappenkörper 16 und der Innenumfangsfläche 11 des Strömungsgehäuses 12 verhindert wird. In der Schließstellung des Klappenkörpers 16 liegt der Klappenkörper 16 in dem Dichtbereich 56 dichtend an der Innenumfangsfläche 11 an.

Es wird somit eine Klappenvorrichtung mit einem exzentrisch gelagerten Klappenkörper geschaffen, bei welcher der Verschleiß auf eine einfache und kostengünstige Weise mittels zweier Aussparungen 50, 52 sowie durch eine Anlaufscheibe 40 reduziert wird und dadurch die Lebensdauer der Klappenvorrichtung erhöht wird.

Es sollte deutlich sein, dass der Schutzbereich nicht auf das beschriebene Ausführungsbeispiel beschränkt ist, sondern verschiedene Modifikationen denkbar sind. So kann beispielsweise das Strömungsgehäuse aus einem anderen Werksstoff hergestellt sein oder die Aussparung anders ausgeführt sein.

## Patentansprüche

1. Klappenvorrichtung für eine Verbrennungskraftmaschine mit einem Strömungsgehäuse (12), dessen Innenumfangsfläche (11) einen Strömungskanal (14) begrenzt,
einer drehbar gelagerten Stellwelle (18), welche durch eine Antriebsvorrichtung (20) antreibbar ist,
einem Klappenkörper (16), welcher an der drehbar gelagerten Stellwelle (18) im Strömungskanal (14) angeordnet ist, wobei die Haupterstreckungsebene (17) des Klappenkörpers (16) zur Drehachse (15) der Stellwelle (18) beabstandet angeordnet ist,
wobei das Strömungsgehäuse (12) an der Innenumfangsfläche (11) eine Aussparung (50, 52) aufweist, wobei die Aussparung (50, 52) im Schwenkbereich (54) des Klappenkörpers (16) angeordnet ist und zu einer durch die Drehachse (15) der Stellwelle (18) und die Längsachse (13) des Strömungskanals (14) aufgespannten Ebene (19) beabstandet angeordnet ist,
**dadurch gekennzeichnet, dass**
die Aussparung (50, 52) eine Tiefe zwischen 0,05 mm und 0,5 mm aufweist.

2. Klappenvorrichtung nach Anspruch 1,
**dadurch gekennzeichnet, dass**
der Klappenkörper (16) in seiner den Strömungskanal (14) vollständig verschließenden Schließstellung dichtend an einem Dichtbereich (56) der Innenumfangsfläche (11) anliegt, wobei sich die Aussparung (50, 52) in Drehrichtung des Klappenkörpers (16) axial bis unmittelbar vor den Dichtbereich (56) erstreckt.

3. Klappenvorrichtung nach Anspruch 1 oder 2,
**dadurch gekennzeichnet, dass**
die Aussparung (50, 52) ausschließlich im Schwenkbereich des Klappenkörpers (16) vorgesehen ist.

4. Klappenvorrichtung nach einem der vorhergehenden Ansprüche, **dadurch gekennzeichnet, dass**
die Aussparung (50, 52) sich ausgehend von einem Anschlussstutzen (45) bis zum Schwenkbereich (54) des Klappenkörpers (16) erstreckt.

5. Klappenvorrichtung nach einem der vorhergehenden Ansprüche, **dadurch gekennzeichnet, dass**
die Aussparung (50, 52) eine Nut ist, welche eine Haupterstreckungsrichtung in Richtung der Längsachse des Strömungskanals (14) aufweist.

6. Klappenvorrichtung nach einem der vorhergehenden Ansprüche, **dadurch gekennzeichnet, dass**
die Aussparung (50, 52) in Umfangsrichtung des Strömungskanals (14) und/oder in Strömungsrichtung des Strömungskanals (14) einen stetigen Übergang zu der Innenumfangsfläche (11) aufweist.

7. Klappenvorrichtung nach einem der vorhergehenden Ansprüche, **dadurch gekennzeichnet, dass**
zwei, tangential zueinander versetzte Aussparungen (50, 52) an der Innenumfangsfläche (11) vorgesehen sind.

8. Klappenvorrichtung nach Anspruch 7,
**dadurch gekennzeichnet, dass**
die erste Aussparung (50) im Bereich einer oberen Hälfte des Klappenkörpers (16) angeordnet ist und die zweite Aussparung (52) im Bereich der unteren Hälfte des Klappenkörpers (16) angeordnet ist.

9. Klappenvorrichtung nach einem der vorhergehenden Ansprüche, **dadurch gekennzeichnet, dass**
das Strömungsgehäuse (12) aus Kunststoff hergestellt ist.

10. Klappenvorrichtung nach Anspruch 9,
**dadurch gekennzeichnet, dass**
das Strömungsgehäuse (12) aus Polyphenylensulfid hergestellt ist.

11. Klappenvorrichtung nach einem der vorhergehenden Ansprüche, **dadurch gekennzeichnet, dass**
der Klappenkörper (16) aus einem metallischen Werkstoff hergestellt ist.

12. Klappenvorrichtung nach einem der vorhergehenden Ansprüche, **dadurch gekennzeichnet, dass**
die Antriebsvorrichtung (20) in einem Antriebsgehäuse (21) angeordnet ist, wobei das Antriebsgehäuse (21) einstückig mit dem Strömungsgehäuse (12) ausgeführt ist.

13. Klappenvorrichtung nach einem der vorhergehenden Ansprüche, **dadurch gekennzeichnet, dass**
die Stellwelle (18) einseitig gelagert ist, wobei die Stellwelle (18) durch eine Öffnung im Strömungsgehäuse (12) in den Strömungskanal (14) ragt.

14. Klappenvorrichtung nach einem der vorhergehenden Ansprüche, **dadurch gekennzeichnet, dass**
an der Stellwelle (18) eine Anlaufscheibe (40) vorgesehen ist, wobei die Anlaufscheibe (40) zwischen dem Klappenkörper (16) und der Innenumfangsfläche (11) des Strömungsgehäuses (12) angeordnet ist.

15. Klappenvorrichtung nach Anspruch 14,
**dadurch gekennzeichnet, dass**
die Anlaufscheibe (40) mit einer zum Klappenkörper (16) abgewandten Fläche am Strömungsgehäuse (12) anliegt und mit einer zum Klappenkörper (16) zugewandten Fläche am Klappenkörper (16) anliegt.

16. Klappenvorrichtung nach Anspruch 14 oder 15,
**dadurch gekennzeichnet, dass**
die Anlaufscheibe (40) drehfest an der Stellwelle (18) befestigt ist.

17. Klappenvorrichtung nach einem der vorhergehenden Ansprüche,
**dadurch gekennzeichnet, dass**
die Stellwelle (18) zylindrisch ausgeführt ist und zur Befestigung des Klappenkörpers (16) einen an der Umfangsfläche der Stellwelle (18) hergestellten, abgeflachten Befestigungsbereich (28) aufweist.

18. Klappenvorrichtung nach einem der Ansprüche 14, 15 oder 16 und Anspruch 17,
**dadurch gekennzeichnet, dass**
die Anlaufscheibe (40) über eine formschlüssige Welle-Nabe-Verbindung an der Stellwelle (18) drehfest angeordnet ist, wobei die Anlaufscheibe (40) an dem abgeflachten Befestigungsbereich (28) angeordnet ist, wobei der Querschnitt der Welle-Nabe-Verbindung dem Querschnitt des abgeflachten Befestigungsbereichs (28) der Stellwelle (18) entspricht.

## Claims

1. A flap device for an internal combustion engine with
a flow housing (12), the inner circumferential surface (11) of which delimits a flow channel (14),
a rotatably mounted actuating shaft (18) which can be driven by a drive device (20),
a flap body (16) which is arranged on the rotatably mounted actuating shaft (18) in the flow channel (14), wherein the main extension plane (17) of the flap body (16) is arranged at a distance from the axis of rotation (15) of the actuating shaft (18),
wherein
the flow housing (12) has a recess (50, 52) on the inner circumferential surface (11), wherein the recess (50, 52) is arranged in the pivot region (54) of the flap body (16) and is arranged at a distance from a plane (19) spanned by the axis of rotation (15) of the actuating shaft (18) and the longitudinal axis (13) of the flow channel (14),
**characterized in that**
the recess (50, 52) has a depth of between 0.05 mm and 0.5 mm.

2. The flap device according to Claim 1,
**characterized in that**
in its closed position completely closing the flow channel (14), the flap body (16) lies in a sealing manner against a sealing region (56) of the inner circumferential surface (11), wherein the recess (50, 52) extends axially to directly in front of the sealing region (56) in the direction of rotation of the flap body (16).

3. The flap device according to Claim 1 or 2,
**characterized in that**
the recess (50, 52) is provided exclusively in the pivot region of the flap body (16).

4. The flap device according to one of the preceding claims,
**characterized in that**
the recess (50, 52) extends, starting from a connecting piece (45), to the pivot region (54) of the flap body (16).

5. The flap device according to one of the preceding claims,
**characterized in that**
the recess (50, 52) is a groove which has a main extension direction in the direction of the longitudinal axis of the flow channel (14).

6. The flap device according to one of the preceding claims,
**characterized in that**
the recess (50, 52) has a continuous transition to the inner circumferential surface (11) in the circumferential direction of the flow channel (14) and/or in the flow direction of the flow channel (14).

7. The flap device according to one of the preceding claims,
**characterized in that**
two recesses (50, 52), offset tangentially to one another, are provided on the inner circumferential surface (11).

8. The flap device according to Claim 7,
**characterized in that**
the first recess (50) is arranged in the region of an upper half of the flap body (16), and the second recess (52) is arranged in the region of the lower half of the flap body (16).

9. The flap device according to one of the preceding claims,
**characterized in that**
the flow housing (12) is made of plastic.

10. The flap device according to Claim 9,
**characterized in that**
the flow housing (12) is made of polyphenylene sulphide.

11. The flap device according to one of the preceding claims,
**characterized in that**
the flap body (16) is made of a metallic material.

12. The flap device according to one of the preceding claims,
**characterized in that**
the drive device (20) is arranged in a drive housing (21), wherein the drive housing (21) is embodied in one piece with the flow housing (12).

13. The flap device according to one of the preceding claims,
**characterized in that**
the actuating shaft (18) is mounted on one side, wherein the actuating shaft (18) protrudes into the flow channel (14) through an opening in the flow housing (12).

14. The flap device according to one of the preceding claims,
**characterized in that**
a thrust washer (40) is provided on the actuating shaft (18), wherein the thrust washer (40) is arranged between the flap body (16) and the inner circumferential surface (11) of the flow housing (12).

15. The flap device according to Claim 14,
**characterized in that**
the thrust washer (40) lies against the flow housing (12) with a surface facing away from the flap body (16) and lies against the flap body (16) with a surface facing the flap body (16).

16. The flap device according to Claim 14 or 15,
**characterized in that**
the thrust washer (40) is fastened to the actuating shaft (18) in a rotationally fixed manner.

17. The flap device according to one of the preceding claims,
**characterized in that**
the actuating shaft (18) is embodied in a cylindrical manner and has a flattened fastening region (28) produced on the circumferential surface of the actuating shaft (18) for fastening the flap body (16).

18. The flap device according to one of Claims 14, 15 or 16 and Claim 17,
**characterized in that**
the thrust washer (40) is arranged in a rotationally fixed manner on the actuating shaft (18) via a form-fitting shaft-hub connection, wherein the thrust washer (40) is arranged on the flattened fastening region (28), wherein the cross-section of the shaft-hub connection corresponds to the cross-section of the flattened fastening region (28) of the actuating shaft (18).

## Revendications

1. Dispositif de clapet pour un moteur à combustion avec un boîtier d'écoulement (12) dont la surface périphérique intérieure (11) délimite un canal d'écoulement (14),
un arbre de réglage (18) monté en rotation, qui peut être entraîné par un dispositif d'entraînement (20),
un corps de clapet (16) qui est disposé sur l'arbre de réglage (18) monté en rotation dans le canal d'écoulement (14), dans lequel le plan d'extension principal (17) du corps de clapet (16) est disposé à distance de l'axe de rotation (15) de l'arbre de réglage (18),
dans lequel le boîtier d'écoulement (12) présente un évidement (50, 52) sur la surface périphérique intérieure (11), dans lequel l'évidement (50, 52) est disposé dans la zone de pivotement (54) du corps de clapet (16) et est disposé espacé d'un plan (19) tendu par l'axe de rotation (15) de l'arbre de réglage (18) et l'axe longitudinal (13) du canal d'écoulement (14),
**caractérisé en ce que**
l'évidement (50, 52) présente une profondeur comprise entre 0,05 mm et 0,5 mm.

2. Dispositif de clapet selon la revendication 1,
**caractérisé en ce que**
le corps de clapet (16), dans sa position de fermeture obturant complètement le canal d'écoulement (14), repose de manière étanche contre une zone d'étanchéité (56) de la surface périphérique intérieure (11), dans lequel l'évidement (50, 52) s'étend axialement dans le sens de rotation du corps de clapet (16) jusqu'à immédiatement devant la zone d'étanchéité (56).

3. Dispositif de clapet selon la revendication 1 ou 2,
**caractérisé en ce que**
l'évidement (50, 52) est prévu exclusivement dans la zone de pivotement du corps de clapet (16).

4. Dispositif de clapet selon l'une quelconque des revendications précédentes,
**caractérisé en ce que**
l'évidement (50, 52) s'étend en partant d'une tubulure de raccordement (45) jusqu'à la zone de pivotement (54) du corps de clapet (16).

5. Dispositif de clapet selon l'une quelconque des revendications précédentes,
**caractérisé en ce que**
l'évidement (50, 52) est une rainure qui présente une direction d'extension principale en direction de l'axe longitudinal du canal d'écoulement (14).

6. Dispositif de clapet selon l'une quelconque des revendications précédentes,
**caractérisé en ce que**
l'évidement (50, 52) présente une transition continue vers la surface périphérique intérieure (11) dans la direction périphérique du canal d'écoulement (14) et/ou dans la direction d'écoulement du canal d'écoulement (14).

7. Dispositif de clapet selon l'une quelconque des revendications précédentes,
**caractérisé en ce que**
deux évidements (50, 52), décalés tangentiellement l'un par rapport à l'autre, sont prévus sur la surface périphérique intérieure (11).

8. Dispositif de clapet selon la revendication 7,
**caractérisé en ce que**
le premier évidement (50) est disposé dans la zone d'une moitié supérieure du corps de clapet (16) et le second évidement (52) est disposé dans la zone de la moitié inférieure du corps de clapet (16).

9. Dispositif de clapet selon l'une quelconque des revendications précédentes,
**caractérisé en ce que**
le boîtier d'écoulement (12) est fabriqué à partir de matière plastique.

10. Dispositif de clapet selon la revendication 9,
**caractérisé en ce que**
le boîtier d'écoulement (12) est fabriqué à partir de sulfure de polyphénylène.

11. Dispositif de clapet selon l'une quelconque des revendications précédentes,
**caractérisé en ce que**
le corps de clapet (16) est fabriqué à partir d'un matériau métallique.

12. Dispositif de clapet selon l'une quelconque des revendications précédentes,
**caractérisé en ce que**
le dispositif d'entraînement (20) est disposé dans un boîtier d'entraînement (21), dans lequel le boîtier d'entraînement (21) est réalisé d'une seule pièce avec le boîtier d'écoulement (12).

13. Dispositif de clapet selon l'une quelconque des revendications précédentes,
**caractérisé en ce que**
l'arbre de réglage (18) est monté sur un côté, dans lequel l'arbre de réglage (18) fait saillie dans le canal d'écoulement (14) à travers une ouverture dans le boîtier d'écoulement (12).

14. Dispositif de clapet selon l'une quelconque des revendications précédentes,
**caractérisé en ce que**
une rondelle de butée (40) est prévue sur l'arbre de réglage (18), dans lequel la rondelle de butée (40) est disposée entre le corps de clapet (16) et la surface périphérique intérieure (11) du boîtier d'écoulement (12).

15. Dispositif de clapet selon la revendication 14,
**caractérisé en ce que**
la rondelle de butée (40) repose sur le boîtier d'écoulement (12) avec une surface dirigée à l'opposé du corps de clapet (16) et repose sur le corps de clapet (16) avec une surface orientée vers le corps de clapet (16).

16. Dispositif de clapet selon la revendication 14 ou 15,
**caractérisé en ce que**
la rondelle de butée (40) est fixée de manière solidaire en rotation sur l'arbre de réglage (18).

17. Dispositif de clapet selon l'une quelconque des revendications précédentes,
**caractérisé en ce que**
l'arbre de réglage (18) est réalisé de manière cylindrique et présente une zone de fixation aplatie (28) produite sur la surface périphérique de l'arbre de réglage (18) pour la fixation du corps de clapet (16).

18. Dispositif de clapet selon l'une quelconque des revendications 14, 15 ou 16 et la revendication 17,
**caractérisé en ce que**
la rondelle de butée (40) est disposée de manière solidaire en rotation sur l'arbre de réglage (18) par le biais d'une liaison arbre-moyeu par complémentarité de formes, dans lequel la rondelle de butée (40) est disposée sur la zone de fixation aplatie (28), dans lequel la section transversale de la liaison arbre-moyeu correspond à la section transversale de la zone de fixation aplatie (28) de l'arbre de réglage (18).
